# EUROPÄISCHE PATENTSCHRIFT

(11) **EP 0 689 863 B1**
(45) Veröffentlichungstag und Bekanntmachung des Hinweises auf die Patenterteilung: **26.08.1998**
(21) Anmeldenummer: 95109408.5
(22) Anmeldetag: 18.06.1995
(51) Int. Cl.: B01D 67/00, B01D 69/02, B01D 69/10, B01D 69/12

(54) **Mehrschichtige Mikrofiltrationsmembran mit integrierter Vorfilterschicht und Verfahren zu ihrer Herstellung**
Multilayered microfiltration membrane with integral pre-filter layer and process for preparing the same
Membrane multicouche de microfiltration avec une couche comme pré-filtre intégrée et procédé de préparation

(30) Priorität: 23.06.1994 DE 4421871
(43) Veröffentlichungstag der Anmeldung: 03.01.1996
(73) Patentinhaber: SEITZ-FILTER-WERKE GmbH, 55543 Bad Kreuznach (DE)
(72) Erfinder: Holzki, Udo, D-55286 Wörrstadt (DE); Müller, Heinz-Joachim, Dr., D-55542 Bad Kreuznach (DE); Renner, Tilo, D-55595 Mandel (DE)
(74) Vertreter: Fuchs Mehler Weiss

(56) Entgegenhaltungen:
- DE-A- 4 424 482
- GB-A- 2 219 221
- US-A- 5 228 994
- DATABASE WPI Week 8318, Derwent Publications Ltd., London, GB; AN 83-42391K & JP-A-58 049 408 (NITTO ELECTRIC) 23. März 1983
- PATENT ABSTRACTS OF JAPAN vol. 4, no. 190 (C-37) (672) 26. Dezember 1980 & JP-A-55 129 109 (NITTO DENKI KOGYO) 6. Oktober 1980

## Beschreibung

Die Erfindung betrifft eine mehrschichtige, ungestützte, integrale Mikrofiltrationsmembran (MF-Membran), aus für das Phaseninversionsverfahren geeignetem Polymermaterial, mit Ausnahme von aliphatischem Polyamid, und mit mindestens einer Endfilterschicht und mindestens einer integrierten Vorfilterschicht, sowie ein Verfahren zu ihrer Herstellung.

Mikrofiltrationsmembranen sind im Stand der Technik bekannt. Solche Membranen weisen im allgemeinen Porendurchmesser im Bereich von 0,01 bis 10µm auf. Mikrofiltrationsmembranen lassen sich einteilen in:
a) symmetrische Membranen, bei denen der Durchmesser der Mikroporen in Richtung ihrer Dicke praktisch konstant bleibt und die so mit auf beiden Seiten nahezu gleich große Porendurchmesser aufweisen;
b) asymmetrische Membranen, in welchen eine dünne 0,1 bis 0,25µm dicke dichte Hautschicht (Skin) integral gebunden auf einem porösen Substratkörper aufliegt. Durch die Skin wird sowohl die Permeabilität als auch die Permselektivität der Doppelschichtmembran bestimmt, während der poröse Substratkörper im wesentlichen als Stützstruktur für die Skin dient;
c) Komposit-Membranen, welche im Prinzip eine asymmetrische Membran mit einer Skin darstellen, wobei Skin und Stützstruktur aus verschiedenen Polymermaterialien bestehen. Das Stützmaterial ist bereits als asymmetrische Membran ausgebildet, auf welcher dann die dünne Schicht der Skin aufgebracht wird.

Während Komposit-Membranen im wesentlichen für reverse Osmose, Pervaporation und Gastrennung, jedoch weniger für die Zwecke der Mikrofiltration eingesetzt werden, sind symmetrische Membranen und asymmetrische Membranen im Mikrofiltrationsbereich häufig anzutreffen.

Symmetrische Mikrofiltrationsmembranen bieten im allgemeinen eine hohe Rückhalterate und sind infolge ihrer homogenen Membranstruktur auch relativ sicher, sie weisen jedoch eine niedrige Strömungsrate auf, da sie dem Flüssigkeitsstrom bei der Filtration einen großen Widerstand entgegensetzen. Infolge der relativ geringen Porosität und der in erster Näherung nur zweidimensionalen Oberfläche neigen solche Membranen jedoch dazu, relativ schnell zu verblocken, was sich in einer begrenzten Schmutzbelastbarkeit (Fouling) niederschlägt, so daß Filtrationsstandzeit nicht lange andauert (DE-A-37 01 633). Demgegenüber bieten asymmetrische Membranen eine hohe Standzeit, wenn sie von der grobporigen Seite angeströmt werden, da die kleinsten der herauszufilternden Teilchen durch die Dichte der Skin im wesentlichen eingefangen werden können, und somit die gesamte Dicke der Membran wirksam ausgenutzt werden kann, wodurch die Strömungsrate erhöht wird. Da aber die dichte Skin an der Oberfläche angeordnet ist, können dort leicht Kratzer auftreten, wodurch die Sicherheit und die Rückhalteraten wesentlich herabgemindert werden (DE-A-37 40 871).

In der EP-A-05 94 007 wird eine integrale Komposit-Membran für die Mikrofiltration beschrieben, wobei auf eine vorgefertigte symmetrische Membran, welche als Vorfilterschicht dienen soll, eine Trennschicht nachträglich aufgegossen wird. Die Dicke dieser Trennschicht liegt im Bereich von 2 bis maximal 40 µm.

Aufgrund des in der EP-A-05 94 007 angegebenen Herstellungsverfahren ist für den Fachmann ersichtlich, daß es sich bei der nachträglich aufgegossenen Trennschicht um eine asymmetrische Schicht hendeln muß. So wird angegeben, daß die Lösung zur Bewirkung der Koagulation mit einem Nichtlöser kontaktiert wird und auch sonst wird in der EP 05 94 007 kein Nichtlöseranteil in der Polymerlösung erwähnt. Beide Umstände deuten nach Staude "Membranen und Membranprozesse", Weinheim 1992, S. 10 ff. klar auf die Bildung asymmetrischer Membranen. Es zeigt sich jedoch, daß derartige Membranen relativ schlechte Standzeiten aufweisen.

In der DE-A-37 01 633 und der DE-A-37 40 871 werden die oben für asymmetrische Membranen beschriebenen Nachteile dadurch behoben, daß über einer gezielte Prozeßfürung in einem Trocken-Naß-Verfahren die empfindliche Trennschicht (Skin) ins Innere der Membran verlegt wird und somit besser geschützt ist. Nachteilig bleibt aber nach wir vor die relativ geringe Dicke der Trennschicht, so daß eventuell auftretende Membranfehler wie beispielsweise einige übergroße Poren, die Rückhaltecharakteristik der Membranen wesentlich verschlechtern können. In der EP-A-0 083 489 werden die auf die Empfindlichkeit der Skin zurückzuführenden Probleme bei asymmetrischen Mikrofiltrationsmembranen dadurch gelöst, indem zwei asymmetrische Membranen jeweils so aufeinandergelegt werden, daß sich ihre Hautschichten berühren. Diese Lösung hat aber den Nachteil, daß das Herstellungsverfahren relativ aufwendig ist und darüber hinaus die über die Porengrößen der Skin in bezug auf die Ausschlußgröße von Teilchen eingestellte Porencharakteristik sich infolge der statistischen Anordnung von jeweils einander gegenüberliegenden Poren bzw. Matrixmaterial verändert.

Werden feinporige Mikrofiltrationsmembranen mit nominellen Porengrößen <0,45 µm in Filterkerzen eingebaut, so weisen sie an ihren Bruchkanten eine Porosität auf, welche größer ist als die Porosität an der Oberfläche dieser Membranen. Dadurch werden die über die Porencharakteristick der Membran eingestellten Filtrationseigenschaften verfälscht. In der DE-C-3 818 860 wurde daher eine Kombination aus mindestens drei Membranen unterschiedlicher Materialien und unterschiedlicher Porengrößen und Porengeometrie gewählt, so daß die grobporigere Membran die Funktion eines Vorfilters und die feinporige Membran die Funktion also Endfilter ausübte. Mit dieser Hybridtechnik konnten somit auch in Filterkerzen feinporige Mikrofiltrationsmembranen mit nominellen Porengrößen <0,45 µm zur Anwendung kommen. Nachteilig war hier jedoch, daß die so aufeinandergelegten Membranen beim Einbau in die Filterkerzen nicht so einfach zu handhaben waren, wie Einzelmembranen. Bei der Dampfsterilisation der Filterkerzen können sich die äußeren Membranlagen ausstülpen, was zu einer Beschädigung führen würde. Eine Mehrschicht-Einzelmembran mit integralen Einzelschichten wird in der US-A-4,340,480 beschrieben, wo die einzelnen Lagen im nassen Zustand aufeinandergepreßt und zusammen getrocknet werden. Dieses Herstellungsverfahren ist jedoch nur bei solchen Polymeren möglich, welche eine hohe Absorptionsfähigkeit für Wasser besitzen, wie beispielsweise das in der US-A-4,340,480 verwendete Polyamid 66 mit einer Wasserabsorptionsfähigkeit (Sättigung) von 8,5 Gew.-%.

Die nicht vorveröfffentlichte DE-A-44 24 482 beschreibt die Herstellung von Membranen aus zwei Schichten unterschiedlicher Porosität durch direktes Ausgießen der entsprechenden Gießlösungen. Neben der Tatsache, daß zwingend eine Stützschicht aus fasrigem Material erforderlich ist, wird die Membranbildung auch in zwei Schritten vollzogen. Nachdem die beiden Gießlösungen auf das Trägermaterial aufgebracht werden sind, wird die Membran, die sowohl eine erste als auch die zweite Schicht aufweist, dann gleichzeitig im selben Aushärtebad ausgehärtet. Offenbart werden demnach gestützte Membranen, die nicht nach einem Phaseninversionsverfahren hergestellt wurden.

Der Erfindung liegt daher die Aufgabe zugrunde, Mikrofiltrationsmembranen zur Verfügung zu stellen, welche als Einzelmembran aus zwei oder mehreren integralen Schichten aufgebaut sind, welche bei einer hohen Rückhalterate und hoher Sicherheit gleichzeitig eine hohe Schmutzbelastbarkeit (Standzeit) aufweisen sollen, welche kostengünstig aus dem gleichen Membranmaterial hergestellt werden können, wobei auch Polymermaterial mit geringerer Wasseraufnahmefähigkeit zur Anwendung kommen kann, und welche mit nominellen Porengrößen unter 0,45 µm auch problemlos in Membranfilterkerzen eingebaut und verwendet werden können.

Gelöst werden diese sowie weitere nicht einzeln angegebene Aufgaben durch eine mehrschichtige, ungestützte, integrale MF-Membran mit den Merkmalen des kennzeichnenden Teils des Anspruchs 1. Im Hinblick auf das Verfahren stellt der Gegenstand des Anspruchs 5 eine Lösung des der Erfindung zugrunde liegenden Problems dar. Vorteilhafte Abwandlungen der MF-Membran sowie des Verfahrens zu ihrer Herstellung werden in den jeweiligen abhängigen Ansprüchen unter Schutz gestellt.

Dadurch, daß die Endfilterschicht eine Dicke zwischen 50 und 300 µm hat und eine symmetrische Porenstruktur aufweist, wobei das Verhältnis der Dicken von Endfilterschicht zur Vorfilterschicht im Bereich zwischen 1:4 bis 4:1 liegt, kommt es gegenüber den aus dem Stand der Technik bekannten MF-Membranen vorteilhaft zu einer hohen Rückhalterate gepaart mit einer minimalen Verblockung der MF-Membranen bei deren Einsatz als Filter. In der Kombination einer integrierten Endfilterschicht, die symmetrisch im Hinblick auf ihre Porenstruktur ist und eine relativ große Dicke aufweist, mit mindestens einer integrierten Vorfilterschicht wird überaus nützlich eine mit relativ geringem Aufwand und einfachen Mitteln zu fertigende MF-Membran zur Verfügung gestellt, die im Gegensatz zu asymmetrischen Membranen, sehr viel robuster ist. So werden aufgrund einer einheitlichen Porenstruktur der Endfilterschicht in Verbindung mit deren Dicke von 50 bis ca 300 µm kleinere Beschädigungen der Oberfläche tolerierbar, die bei Membranen gemäß dem Stand der Technik bereits zu einem Versagen, also einem Totalausfall führen.

Das Verfahren zur Herstellung mehrschichtiger, ungestützter, integraler Mikrofilrationsmembranen, in welchem eine Polymerlösung auf eine Unterlage aufgegossen, das Lösungsmittel entweder abgedampft oder ein Dampf aus einem Nichtlöser eindiffundiert wird, und die fertige Membran ausgewaschen und sodann getrocknet wird, kennzeichnet sich dadurch, daß nach bekanntem Verfahren ein Schicht einer Polymerlösung auf die Unterlage ausgegossen wird und dann nacheinander eine oder weitere Schichten einer Polymerlösung jeweils vor Einsetzen der Trübung der zuvor ausgegossenen Schicht auf diese ausgegossen wird, wobei die Viskosität einer jeweils aufgegossenen Polymerlösung so eingestellt wird, daß sie gleich der oder neidriger als die Viskosität der zuvor ausgegossenen Polymerlösung ist.

Verfahrensgemäß wird die Aufgabe also gelöst, indem in einem Phaseninversionsverfahren nach dem Trockenprozeß eine Schicht eine Polymerlösung zunächst auf die Unterlage ausgegossen wird und nacheinander eine oder mehrere Schichten einer weiteren Polymerlösung, vorzugsweise mit dem gleichen membranbildenden Polymermaterial, jeweils vor Einsetzen der Trübung der zuvor ausgegossenen Schicht auf diese ausgegossen wird, wobei die Viskosität einer jeweils aufgegossenen Polymerlösung so eingestellt wird, daß sie höchstens gleich oder niedriger als die Viskosität der zuvor ausgegossenen Polymerlösung ist. Dadurch wird eine mikroporöse, mehrschichtige, integrale Filtrationsmembran (MF-Membran) erhalten, deren Endfilterschicht eine homogene symmetrische Porenstruktur aufweist, die man mit einer ausreichenden Dicke versehen kann, um zu filtrierende Partikel mit entsprechender Rückhalterate zurückzuhalten. Integral mit dieser Endfilterschicht sind eine oder mehrere offenporige Vorfilterschichten aus gleichem Membranmaterial verbunden, wodurch für die Anströmseite der Membran eine große Porosität zur Verfügung steht.

Aufgrund des eingesetzten Trockenverfahrens, wie es beispielsweise in der DE-A-40 00 825 und der DE-A-40 07 383 beschrieben ist, wobei die Membran durch Kontakt mit feuchter Luft hergestellt wird, werden die charakteristischen symmetrischen, mikroporösen Membranschichten erzeugt. In diesem Trockenverfahren diffundiert der Wasserdampf gleichmäßig in die Membranschicht hinein, so daß die Phasentrennung bei der Membranbildung und die Verfestigung der Polymermatrix eine über die Dicke gleichmäßige Porenbildung hervorruft, ohne daß der ausgegossene Film in ein Fällbad eingetaucht werden müßte, was die Bildung einer Skinschicht zur Folge hätte. Als Polymermaterial sind dabei unterschiedliche, für das Phaseninversionsverfahren geeignete Polymere einsetzbar, wie beispielsweise Polysulfon, Polyethersulfon, aliphatische und aromatische Polyamide, Zellulosederivate sowie die restlichen, in einem Lösungsmittel löslichen und durch Nichtlöser verfestigbaren Polymere. Das Phaseninversionsverfahren an sich ist dem Fachmann geläufig, z.B. aus: "Kesting, Robert E., Synthetic polymeric membranes, Wiley & Sons, 1985, p. 237" oder "Staude, E. Membranen und Membranprozesse, VCH-Weinheim 1992, s. 10 ff.".

Unter Zellulosederivaten werden dabei alle Polymere verstanden, die durch chemische Modifikation herstellbar sind und welche für die im Rahmen der Erfindung beschriebenen Membranen und Herstellungsprozesse geeignet sind. Insbesondere sollen sie im wesentlichen unlöslich in Wasser und löslich in bestimmten organischen Lösungsmitteln sein; sie sollen eine solche Festigkeit aufweisen, daß sie als Membran benutzt werden können. Zu den einsetzbaren Zellulosederivaten gehören u.a. Zellulosediacetat, Zellulosetriacetat, Zellulosepropionat, Zellulosebutyrat, Mischpolymere der vorgenannten Verbindungen, Ethylzellulose und/oder Zellulosenitrat.

Erfindungsgemäß werden die Membranen so hergestellt, daß eine erste Schicht einer Polymerlösung auf eine Unterlage ausgestrichen wird, über diese Schicht wird eine zweite und bei Bedarf noch mehrere weitere Schichten ausgegossen. Überraschenderweise zeigt sich,daß keine Vermischungen der einzelnen Schichten stattfindet, sofern zwei Bedingungen erfüllt sind: Zum einen müssen die Viskositäten für die jeweilige Polymerlösung höchstens gleich groß sein, oder besser, die Viskositäten für die jeweiligen Polymerlösungen sollten von unten nach oben abnehmen, und zum anderen sollte eine jeweilige Schicht auf die darunterliegende Schicht dann ausgegossen werden, wenn die untere Schicht noch keine Phasentrennung aufweist, d.h. vor beginnender Trübung.

Die obere Grenze der Viskosität für die jeweiligen Polymerlösungen liegt bei ca. 100 Pa·s. Polymerlösungen höherer Viskosität können nicht mehr problemlos nach der beschriebenen Methode mit einem Rakelmesser ausgegossen werden. Die praktische Untergrenze liegt bei ca. 0,5 Pa·s (entspricht etwa einer Polymerkonzentration von 6% Polysulfon mit einem Molekulargewicht von 27000). Noch niedrigere Polymerkonzentrationen sind nicht mehr sinnvoll, da sich darin die ausgerakelte Schicht nicht mehr zu einer Membran verfestigen läßt, sondern nur noch ein unzusammenhängendes Pulver entsteht. Für den praktischen Gebrauch sind Viskositätsbereiche zwischen 0,5 und 25 Pa·s vorzuziehen. Besonders bevorzugt sind Viskositäten im Bereich von 0,8 bis 20 Pa·s.

Prinzipiell wird die Viskosität der jeweiligen Polymerlösung durch den darin enthaltenen Polymergehalt eingestellt. Als Polymer kommt jedoch nicht allein das membranbildende Polymer infrage, sondern auch andere kompatible Polymere, welche in dem Nichtlöser für das membranbildende Polymer löslich sind, wie beispielsweise Polyvinylpyrrolidon (PVP) oder Polyethylenglykol (PEG). Die Zusätze dieser im Nichtlöser löslichen Polymere können je nach Molekulargewicht in Mengen zwischen 0,1 und 100 Gew.-% bezogen auf das membranbildende Polymer eingesetzt werden. Die praktischen Grenzen des Einsatzes ergeben sich durch die Viskosität der Lösung, welch die oben genannten Grenzen nicht unter- oder überschreiten sollte.

Somit können also erfindungsgemäß selbst bei gleichen Viskositäten der nacheinander aufgegossenen Schichten unterschiedliche Vor- und Endfilterschichten entstehen, da eben die Viskosität der Lösung u.A. durch Membranpolymer (ergibt Porengröße) und Zusätze (erhöhen die Viskosität) eingestellt wird. Neben den erfindungsgemäß bevorzugten Varianten die Viskosität der jeweiligen Polymerlösung über den Polymergehalt des membranbildenden Poymers einzustellen oder über den Gehalt an membranbildendem Polymer und durch Zusatz eines oder mehrerer kompatibler, im Nichtlöser für das membranbildende Polymer löslicher Polymere, kann die Viskosität durch eine Reihe anderer Parameter beinflußt werden. In Frage kommen: das Molekulargewicht des Membranpolymers, das Molekulargewicht der Zusätze, Wahl von Lösungsmittel und Nichtlöser, weiterhin ist die Temperatur von Bedeutung.

Wie gesagt läßt sich die Porenstruktur und Porengröße einer jeweiligen Schicht vorwiegend durch den Gehalt an membranbildendem Polymer in der dafür bestimmten Gießlösung steuern, d.h. die eigentliche Trennschicht (bevorzugt die Endfilterschicht), welche die kleinste Porengröße unter den Schichten aufweist, besitzt dementsprechend auch den höchsten Gehalt an membranbildendem Polymer. Somit kann die Lage der eigentlichen Trennschicht, ob endständig oder zwischen zwei Vorfilterschichten eingebettet, durch die Polymerzusammensetzung der jeweiligen Gießlösungen definiert werden. Die Dicke dieser Endfilterschicht beträgt zwischen 50 und 300 µm, bevorzugt, zwischen 50 und 250µm, mit nominellen Porengrößen von vorzugsweise 0,1 bis 2 µm.

Im Rahmen des erfindungsgemäßen Verfahrens ist es wichtig, daß die Viskosität der unteren, also der früher ausgegossenen Schicht nicht größer als die Viskosität der oberen, also der darauf gegossenen Schicht ist, da es sonst zu einer Vermischung der Schichtung kommen kann. Dabei ist es allerdings wie bereits mehrfach erwähnt möglich, daß die untere Schicht größere Poren bildet, als die obere Schicht, dadurch daß sie weniger membranbildendes Polymer enthält. Die notwendige Erhöhung der Viskosität der unteren Schicht gegenüber der oberen Schicht kann in diesem Fall durch die Auswahl der Art und Menge von Additiven erfolgen, die zur Steuerung der Viskosität geeignet sind.

Zwar lassen sich erfindungsgemäße Membranen auch bei gleichgroßer Viskosität der jeweiligen Gießlösungen herstellen, doch ist es vorteilhaft, bei kontinuierlicher Produktion die Viskositäten für die Gießlösungen so zu wählen, daß die Viskosität der oberen Schicht mindestens um den Faktor 2 kleiner ist als die Viskosität der jeweils darunterliegenden Schicht. Die Zeit zwischen den aufeinanderfolgenden Aufgießprozessen muß möglichst kurz sein. Werte zwischen 6 sec. und 2 min erwiesen sich als vorteilhaft. Es sei jedoch darauf hingewiesen, daß nicht die Zeit von entscheidender Bedeutung ist, sondern die Fällwirkung in dieser Zeit. So hat beispielsweise trockene Luft eine kleinere Fällwirkung als feuchte Luft. Voraussetzung bei dem sequentiellen Gießprozeß ist jedoch, daß bei der jeweils unteren Schicht noch keine Phasentrennung aufgetreten ist, wenn die jeweils darüberliegende Schicht aufgegossen wird. Zeigt sich nämlich bei der jeweils darunterliegenden Schicht bereits eine Phasentrennung, dann erweist sich die zwischen dieser und der darüberliegenden Schicht auftretende Haftung als zu gering. Für die Verwendungszwecke der erfindungsgemäßen Membran, insbesondere auf hohe Schmutzbelastbarkeit, sind mindestens zwei Membranen, nämlich eine Vorfiltermembran und eine Endfiltermembran erforderlich. Die Anströmung der erfindungsgemäßen Membran sollte dann von der Vorfilterseite her erfolgen. Prinzipiell bietet das erfindungsgemäße Verfahren auch die Möglichkeit, drei oder mehr Schichten aufeinanderzugießen, um so eine bessere Abstufung der Membranporengrößen zu erreichen, Andererseits ist es auch denkbar, die Trennschicht der Membran ins Innere zu verlagern, d.h., zwischen zwei Vorfilterschichten einzubetten. Es ist theoretisch auch möglich, beide Anordnungsmöglichkeiten zu kombinieren und so vier- oder auch fünfschichtige Membranen herzustellen. Dies dürfte jedoch technisch nicht mehr sinnvoll sein, da der höhere Aufwand für die Herstellung in keinem Verhältnis zum erzielten Nutzen steht.

Bei einer erfindungsgemäßen Membran mit Endfilterschicht und Vorfilterschicht beträgt das Verhältnis der Dicken von Vorfilterschicht zu Endfilterschicht 1:4 bis 4:1, vorzugsweise liegt es zwischen 1:3 und 3:1. Dabei gelten die genannten Verhältnisse bevorzugt für Membranen mit nur einer Vorfilterschicht.

Für eine endständige Trennschicht bei Mehrschichtenmembranen gibt es prinzipiell zwei Möglichkeiten bei der Herstellung:
a) Als erstes wird die Gießlösung für die Endfilterschicht auf der Unterlage ausgegossen, d.h., in der dafür vorgesehenen Gießlösung sind sowohl der Polymergehalt insgesamt als auch der Gehalt an membranbildendem Polymer am höchsten. Die Gießlösungen für die darauffolgendenk Schichten weisen dann entsprechend abgestufte, sinkende Viskositäten auf.
b) Zunächst werden ein oder mehrere Vorfilterschichten ausgegossen, und als oberste Schicht dann die Endfilterschicht. Dies bedeutet, da die Gießlösung für die zuerst ausgegossene Schicht die höchste Viskosität aufweisen soll, daß die Gießlösung mehr kompatible Polymerzusätze, wie beispielsweise PVP oder PEG, neben dem eigentlichen membranbildenden Polymer aufweisen muß als die nächsthöhere Schicht, um eine abgestufte Porosität zu erzielen. Die Gießlösung für die oberste Schicht, welche die eigentliche Trennschicht (Endifilterschicht) definiert, weist dementsprechend den geringsten Gesamtpolymergehalt, jedoch den höchsten Gehalt an membranbildendem Polymer auf.

Es ist auch denkbar, die Phasentrennung im Trockenprozeß nicht durch Eindiffundieren des Nichtlösers herbeizuführen, sondern durch Abkühlen einer heißen Lösung eines oder mehrerer Polymeren in einem Lösungsmittelgemisch, die nur oberhalb einer bestimmten Temperatur eine homogene, flüssige Phase bilden.

Die Erfindung wird nun anhand einiger Beispiele näher erläutert.

Von den nach den Beispielen 1 und 2 erhaltenen Membranen wurden jeweils die in den Figuren wiedergegebenen REM-Aufnahmen (ESM) hergestellt.

Es zeigen:
- Figur 1:: einen Querschnitt einer gemäß dem Verfahren nach Beispiel 1 erhaltenen Membran in 340-facher Vergrößerung;
- Figur 2:: einen Querschnitt durch eine gemäß Beispiel 2 erhaltene Membran in 425-facher Vergrößerung.

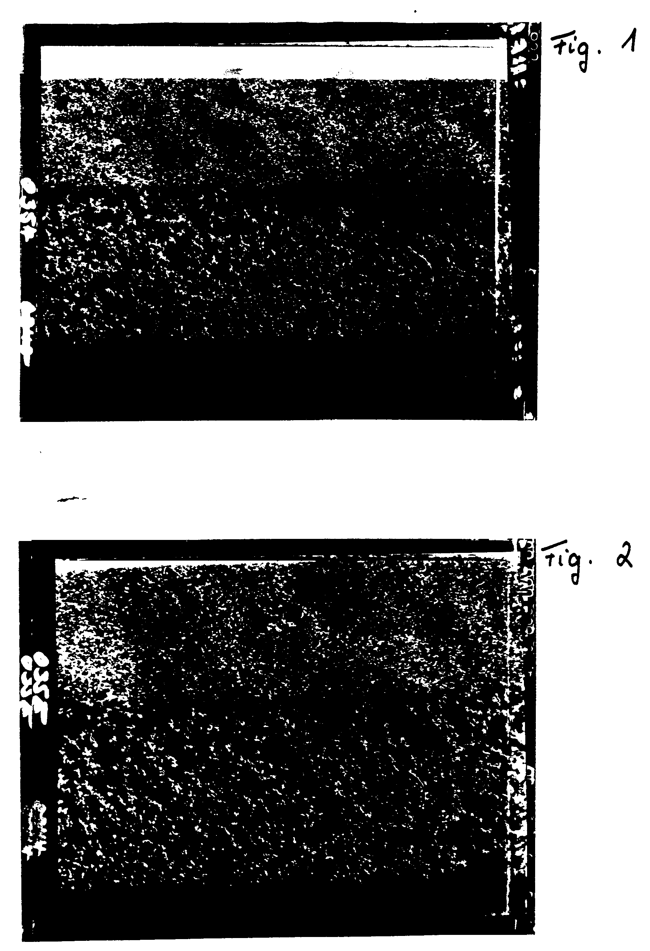

Desweiteren wurde an den nach den Beispielen 1 bis 3 erhaltenen Membranen Modelluntersuchungen zu deren Verblockungsneigung durchgeführt. Als Modell-Lösung wurde eine 1 %-ige wässrige Rohzucker-Lösung verwendet. Hierzu wurde der Zucker in Wasser aufgelöst und die Trübstoffe durch permanentes Rühren in Schwebe gehalten. Die Lösung wurde innerhalb von 12 Stunden verbraucht, um ein Wachstum von Bakterien und Hefen zu vermeiden. Die Temperatur betrug 25°C.

Zur Durchführung des Tests wird eine kreisrunde Membranprobe mit 50 mm Durchmesser in einem geeigneten Filterhalter eingespannt und unter einem Druck von 1 bar mit der erwähnten Rohzuckerlösung beaufschlagt. Die durchströmende Flüssigkeit wird aufgefangen. Hierbei verblockt die Membran und der Durchsatz verringert sich immer mehr. Wenn der Abstand zwischen zwei aufeinanderfolgenden Flüssigkeitstropfen mehr als 30 sec beträgt, wird der Versuch beendet und die entsprechende Flüssigkeitsmenge ausgemessen. Durch Umrechnen auf die angeströmte Membranfläche ergibt sich die spezifische Schmutzbelastbarkeit der Membran in ml Lösung pro cm² Membran.

Im Bezug auf die Messung der Membraneigenschaften ist für alle Beispiele anzumerken, daß Polysulfonmembranen ohne Zugabe von Benetzungshilfsmitteln (z.B. PVP) nicht vollständig benetzbar sind. Daher wurde bei allen Versuchen grundsätzlich die Membran zuerst mit Ethanol vorbenetzt und danach gründlich mit Wasser ausgespült. Die so erhaltene nasse Membran wurde dann bei den jeweiligen Untersuchungen eingesetzt.

Die bei den Beispielen angegebenen Viskositäten wurden alle mit einem Viskositätsmeßgerät nach DIN 53019 bei einer Temperatur von 25°C und einer Schergeschwindigkeit von 111s⁻¹ gemessen.

Die Keimreduktion für die im Beispiel 4 hergestellten MF-Membranen wurde nach der Prüfvoranschrift DIN 58 355 Teil 3 gegenüber dem Keim Pseudoma Diminuta (Größe ca 0,2 µm) bestimmt. Das Beispiel zeigt, daß die Rückhalterate umso beser wird, je größer die eigentliche Trennschicht ist. Ab einer Schichtdicke von ca. 60 µm wird die von der Norm geforderte Rückhalterate von > 10⁷ pro cm² Filterfläche erreicht.

Die Beispiele 5 und 6 eigen den Einsatz von Zellulose-Mischestern bzw. Polyamiden als erfingungsgemäß membranbildende Materialien.

### Beispiel 1:

Auf einer Glasplatte wurde eine Schicht von 160 µm einer Lösung von 14% Polysulfon in einem Lösungsmittelgemisch aus NMP und PEG 400 ausgegossen. Die Lösung wies folgende Zusammensetzung auf:

| | |
|---|---|
| PSU: | 14,0 Gew.-% |
| NMP: | 28,7 Gew.-% |
| PEG: | 57,3 Gew.-%. |

Die Viskosität dieser Lösung betrug 9,8 Pa·s. Nach 20 sec wurde eine weitere Schicht mit 9,5% Polysulfon aufgetragen, indem ein weiteres Rakelmesser mit einer Spaltweite von 320 µm mit dieser Lösung über den ersten Film gezogen wurde. Diese Lösung wies die folgende Zusammensetzung auf:

| | |
|---|---|
| PSU: | 9,5 Gew.-% |
| NMP: | 30,2 Gew.-% |
| PEG 400: | 60,3 Gew.-%. |

Die Viskosität dieser Lösung betrug 1,4 Pa·s.

Nach Verfestigen der Membran bei 70% relativer Feuchte und 25°C an stehender Luft (30 min) wurde die Membran in Wasser ausgewaschen und getrocknet.

Für die so erhaltene Membran wurden die folgenden Parameter bestimmt:

| | |
|---|---|
| Blaspunkt: | 3,0 bar |
| Wasserfluß: | 42,5 ml/(cm² . min . bar) |
| Porenstruktur: | s. Figur 1. |

Als Durchsatz bis zur Verblockung mit 1 % wässriger Rohzuckerlösung (Modellsubstanz) wurden folgende Werte erhalten:

| | |
|---|---|
| Anströmung von feinporiger Seite: | 2,8 ml/cm² |
| Anströmung von grobporige Seite: | 42,7 ml/cm². |

### Beispiel 2:

Gemäß Beispiel 1 wurden nacheinander folgende Polymerlösungen auf einer Glasplatte ausgegossen:

### Lösung 1:

| | |
|---|---|
| PSU: | 12,0 Gew.-% |
| NMP: | 29,3 Gew.-% |
| PEG 400: | 58,7 Gew.-% |

Die Viskosität der Lösung betrug 4,2 Pas.

### Lösung 2:

| | |
|---|---|
| PSU: | 9,0 Gew.-% |
| NMP: | 30,3 Gew.-% |
| PEG 400: | 60,7 Gew.-%. |

Die Viskosität dieser Lösung betrug 1,2 Pas. Die folgenden Membranparameter wurden ermittelt:

| | |
|---|---|
| Blaspunkt: | 1,9 bar |
| Wasserfluß: | 81,0 ml/(cm² . min . bar) |

Als Durchsatz bis zur Verblockung mit 1 %-iger wässriger Rohzuckerlösung (Modellsubstanz) wurden folgende Werte ermittelt:

| | |
|---|---|
| Anströmung von feinporiger Seite: | 6,5 ml/cm² |
| Anströmung von grobporiger Seite: | 67,5 ml/cm². |

### Beispiel 3:

Gemäß Beispiel 1 wurden folgende Polymerlösungen nacheinander auf einer Glasplatte ausgestrichen:

### Lösung 1:

| | |
|---|---|
| PSU: | 8 Gew.-% |
| PVP (MG 360 000) | 10,0 Gew.-% |
| NMP: | 27,3 Gew.-% |
| PEG 400: | 54,7 Gew.-%. |

Die Viskosität dieser Lösung betrug 21 Pa·s.

### Lösung 2:

| | |
|---|---|
| PSU: | 14,0 Gew.-% |
| NMP: | 28,7 Gew.-% |
| PEG 400: | 57,3 Gew.-%- |

Die Viskosität dieser Lösung betrug 9,8 Pas.

Als Membranparameter wurden die folgenden Werte ermittelt:

| | |
|---|---|
| Blaspunkt: | 2,6 bar |
| Wasserfluß: | 51 ml/(cm² . min . bar). |

Als Durchsatz bis zur Verblockung mit 1 %-iger wässriger Rohzuckerlösung (Modellsubstanz) wurden ermittelt:

| | |
|---|---|
| Anströmung von feinporiger Seite: | 7,0 ml/cm² |
| Anströmung von grobporiger Seite: | 44,8 ml/cm². |

Die nach den Beispielen 1 bis 3 hergestellten Membranen bestanden jeweils aus zwei Schichten. In den Beispielen 1 und 2 wurden zuerst die Gießlösungen für die Endfilterschicht ausgegossen, darüber dann die Gießlösungen für die jeweilige Vorfilterschicht. In Beispiel 3 wurde zunächst die Gießlösung für die Vorfilterschicht ausgegossen, sodann die Gießlosung für die Endfilterschicht.

Bei der Bestimmung des Duschsatzes bis zur Verblockung mit 1 %-iger wässriger Rohzuckerlösung zeigte sich, daß aufgrund der unterschiedlichen Membranstrukturen auf beiden Seiten der Membran sehr unterschiedliche Filtrationsleistungen bis zur Verblockung auftraten, je nach dem von welcher Seite die entsprechende Membran jeweils angeströmt wurde.

### Beispiel 4a - 4f:

Auf einer Glasplatte wurde jeweils eine Schicht einer Lösung von Polysulfon in einem Lösungsmittelgemisch aus NMP und PEG 400 ausgegossen. Die Lösung wies folgende Zusammensetzung auf:

| | |
|---|---|
| PSU: | 8 % |
| PVP K 90: | 3,1 % |
| NMP: | 59,3 % |
| PEG 400: | 29,6 % |

Die Viskosität dieser Lösung betrug 11,3 Pa.s. Nach der angegebenen Zeit wurde eine weitere Schicht aufgetragen, indem ein weiteres Rakelmesser mit einer neuen Lösung über den ersten Film gezogen wurde. Diese Lösung wies die folgende Zusammensetzung auf:

| | |
|---|---|
| PSU: | 14,5 % |
| NMP: | 28,5 % |
| PEG 400: | 57 % |

Die Viskosität dieser Lösung betrug 9,6 Pa.s.

Nach Verfestigung der Membran bei 78 % relativer Feuchte und 25°C an stehender Luft (30 min) wurden die Membranen jeweils in Wasser ausgewaschen und getrocknet. Für die so erhaltenen Membranen wurden die in der Tabelle angegebenen Parameter bestimmt:

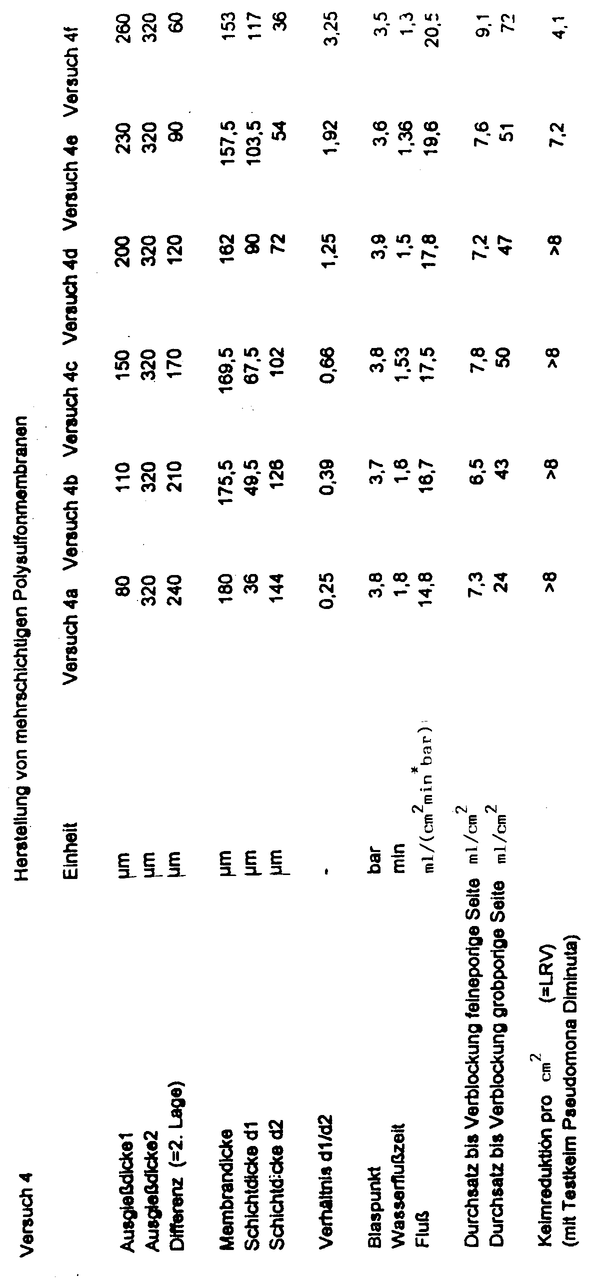

### Beispiel 5:

Auf einer Glasplatte wurde eine Schicht von 160 µm einer Lösung von Zelluloseacetat und Zellulosenitrat in einem Lösungsmittelgemisch aus Aceton und Butanol ausgegossen. Die Lösung wies folgende Zusammensetzung auf:

| | |
|---|---|
| Zellulosenitrat | 13,4 % |
| Zelluloseacet | 1,0 % |
| Aceton | 41,2 % |
| Butanol | 41,4 % |
| Ethanol | 1,7 % |
| Wasser | 1,3 % |

Die Viskosität dieser Lösung betrug 2,13 Pa.s. Nach 20 sec wurde eine weitere Schicht aufgetragen, indem ein weiteres Rakelmesser mit einer Spaltweite von 320 µm mit einer zweiten Lösung über den ersten Film gezogen wurde. Diese Lösung wies die folgende Zusammensetzung auf:

| | |
|---|---|
| Zellulosenitrat | 9,6 % |
| Zelluloseacetat | 0,7 % |
| Aceton | 36,9 % |
| Butanol | 47,1 % |
| Ethanol | 3,5 % |
| Wasser | 2,2 % |

Die Viskosität dieser Lösung betrug 0,63 Pa.s.

Nach Verfestigung der Membran bei 60 % relativer Feuchte und 25 °C an stehender Luft (120 min) wurde die Membran bei 70°C im Trockenschrank getrocknet.

Für die so erhaltene Membran wurden die folgenden Parameter bestimmt.

| | |
|---|---|
| Blaspunkt: | 4,1 bar |
| Wasserfluß: | 16,7 ml/(cm²min bar) |

Als Durchsatz bis zur Verblockung mit 1 % wässriger Rohzuckerlösung (Modellsubstanz) wurden folgende Werte erhalten:

| | |
|---|---|
| Anströmung von feinporiger Seite: | 62 ml / cm² |
| Anströmung von grobporiger Seite: | 840 ml / cm² |

### Beispiel 6:

Entsprechend dem Beispiel 1 der Patentanmeldung DE 40 02 386 wurden auf einer Glasplatte eine Schicht von 160 µm einer Lösung von aromatischen Polyamid (Nomex®) in organischen Lösungsmitteln und dem Lösungshilfsmittel Lithiumchlorid ausgegossen. Die Lösung wies folgende Zusammensetzung auf:

| | |
|---|---|
| aromatisches Polyamid: | 15 % |
| Dimethylformamid: | 55,8 % |
| Dimethylacimamid: | 13,9 % |
| Lithiumchlorid: | 5,3 % |
| Ethandiol: | 10 % |

Die Viskosität dieser Lösung betrug 14,4 Pa.s. Nach 10 sec wurde eine weitere Schicht kaufgetragen, indem ein weiteres Rakelmesser mit einer Spaltweite von 320 µm mit einer neuen Lösung über den ersten Film gezogen wurde. Diese Lösung wies folgende Zusammensetzung auf:

| | |
|---|---|
| aromatisches Polyamid: | 10,0 % |
| Dimethylformamid: | 60,6 % |
| Dimethylacidamid | 15,1 % |
| Lithiumchlorid: | 3,5 % |
| Ethandiol: | 10,8 % |

Die Viskosität dieser Lösung betrug 0,73 Pa.s. Nach Verfestigen der Membran bei 95 % relativer Feuchte und 26°C an stehender Luft (90 min) wurde die Membran in Wasser ausgewaschen und getrocknet.

Für die so erhaltene Membran wurden folgende Parameter bestimmt:

| | |
|---|---|
| Blaspunkt: | 4,3 bar |
| Wasserfluß: | 9,3 ml / (cm²min bar) |

Als Durchsatz bis zur Verblockung mit 1 %iger wässriger Rohzuckerlösung (Modellsubstanz) wurden folgende Werte erhalten:

| | |
|---|---|
| Anströmung von feinporiger Seite: | 6,1 ml / cm² |
| Anströmung von grobporiger Seite: | 15,2 ml / cm² |

Weitere Vorteile und Ausführungsformen der Erfindung ergeben sich aus den nachfolgenden Patentansprüchen.

## Patentansprüche

1. Mehrschichtige, ungestützte, integrale Mikrofiltrationsmembran (MF-Membran) aus für das Phaseninversionsverfahren geeignetem Polymermaterial, mit Ausnahme von aliphatischem Polyamid, und mit mindestens einer Endfilterschicht und mindestens einer integrierten Vorfilterschicht, dadurch gekennzeichnet,
daß die Endfilterschicht eine Dicke zwischen 50 und 300 µm hat und eine symmetrische Porenstruktur aufweist, wobei das Verhältnis der Dicken von Endfilterschicht zur Vorfilterschicht im Bereich zwischen 1:4 und 4:1 liegt.

2. MF-Membran nach Anspruch 1, dadurch gekennzeichnet, daß sie aus einer Endfilterschicht und zwei bis vier Vorfilterschichten besteht.

3. MF-Membran nach Anspruch 1, dadurch gekenzeichnet, daß sie eine Endfilterschicht mit einer nominellen Porengröße zwischen 0,1 und 2 µm und eine grobporige Vorfilterschicht aufweist.

4. MF-Membran nach einem der Ansprüche 1 bis 3, dadurch gekennzeichnet. daß die End- und Vorfilterschichten aus dem gleichen Polymermaterial aufgebaut sind.

5. Verfahren zur Herstellung mehrschichtiger, ungestützter, integraler Mikrofiltrationsmembranen, in welchem eine Polymerlösung auf eine Unterlage aufgegossen, das Lösungsmittel entweder abgedampft oder ein Dampf aus einem Nichtlöser eindiffundiert wird, und die fertige Membran ausgewaschen und sodann getrocknet wird, dadurch gekennzeichnet, daß nach bekanntem Verfahren eine Schicht einer Polymerlösung auf die Unterlage ausgegossen wird und dann nacheinander eine oder weitere Schichten einer Polymerlösung jeweils vor Einsetzen der Trübung der zuvor ausgegossenen Schicht auf diese ausgegossen wird. wobei die Viskosität der Polymer lösungen zwischen 0,5 Pa·s und 100 Pa·s liegt und die Viskosität einer jeweils aufgegossenen Polymerlösung so eingestellt wird, daß sie gleich der oder niedriger als die Viskosität der zuvor ausgegossenen Polymerlösung ist.

6. Verfahren nach Anspruch 5, dadurch gekennzeichnet, daß die zum Ausgießen bestimmten Polymerlösungen Viskositäten zwischen 0.5 Pa·s und 25 Pa·s aufweisen.

7. Verfahren nach Anspruch 5 oder 6, dadurch gekennzeichnet, daß die für das Ausgießen bestimmten Polymerlösungen Viskositäten zwischen 0,8 und 20 Pa·s aufweisen.

8. Verfahren nach einem der Ansprüche 5 bis 7, dadurch gekennzeichnet, daß die Viskosität der jeweiligen Polymerlösung über den Polymergehalt des membranbildenden Polymers eingestellt ist.

9. Verfahren nach einem der Ansprüche 5 bis 7, dadurch gekennzeichnet, daß die Viskosität der jeweiligen Polymerlösung über den Gehalt an membranbildendem Polymer und durch Zusetzen eines oder mehrerer kompatibler, im Nichtlöser für das membranbildende Polymer löslicher Polymerer eingestellt wird.

10. Verfahren nach einem der Ansprüche 5 bis 9, dadurch gekennzeichnet, daß die Viskosität der Polymerlösung für eine Membranschicht jeweils niedriger ist als die Viskosität der Polymerlösung für die zuvor gegossene Membranschicht.

11. Verfahren nach Anspruch 10, dadurch gekennzeichnet, daß die Viskosität der Polymerlösung für eine Schicht jeweils mindestens um den Faktor 2 kleiner ist als die Viskosität der Polymerlösung für die unmittelbar darunterliegende Schicht.

12. Verfahren nach einem der Ansprüche 5 bis 11, dadurch gekennzeichnet daß die Polymerlösung mit dem höchsten Gehalt an im Nichtlöser unlöslichem Polymer die Endfilterschicht definiert.

13. Verfahren nach einem der Ansprüche 5 bis 12, dadurch gekennzeichnet, daß als oberste Polymerlösung die die Endfilterschicht definierende Polymerlösung verwendet wird.

14. Verfahren nach einem der Ansprüche 5 bis 12, dadurch gekennzeichnet daß als Polymerlösung für die unterste Schicht die die Endfilterschicht definierende Polymerlösung verwendet wird.

15. Verfahren nach einem der Ansprüche 5 bis 14, dadurch gekennzeichnet, daß als membranbildendes Polymermaterial Polysulfon, Polyethersulfon, aromatische Polyamide oder Zellulosederivate eingesetzt werden.

16. Verfahren nach einem der Ansprüche 5 bis 7 und 9 bis 15, dadurch gekennzeichnet, daß als Zusatz zu dem membranbildenden Polymer Polyvinylpyrrolidon und/oder Polyethylengykol eingesetzt wird.

17. Verwendung der MF-Membran gemäß den Ansprüchen 1 bis 4 in einer Filterkerze.

## Claims

1. Multi-layered, unsupported, integral micro-filtration membrane (MF membrane) produced from polymer material, with the exception of aliphatic polyamide, suitable for the phase inversion process and having at least one final filter layer and at least one integrated pre-filter layer, characterised in that the final filter layer has a thickness of between 50 and 300 µm and a symmetrical pore structure, the ratio of the thicknesses of the final filter layer to the pre-filter layer being in the range of between 1:4 and 4:1.

2. MF membrane according to claim 1, characterised in that it comprises one final filter layer and from two to four pre-filter layers.

3. MF membrane according to claim 1, characterised in that it has a final filter layer having a nominal pore size of between 0.1 and 2 µm and a coarse-pored pre-filter layer.

4. MF membrane according to any one of claims 1 to 3, characterised in that the final filter and pre-filter layers are constructed from the same polymer material.

5. Process for the manufacture of multi-layered, unsupported, integral micro-filtration membranes in which a polymer solution is poured onto a base, the solvent is either evaporated or a vapour of a non-solvent is introduced by diffusion, and the finished membrane is washed and then dried, characterised in that, according to the known process, a layer of a polymer solution is poured out onto the base and then one or more layers of a polymer solution is/are poured out onto it one after the other, in each case before the layer previously poured out has begun to turn turbid, the viscosity of the polymer solutions being between 0.5 Pa/s and 100 Pa/s and the viscosity of each polymer solution poured on being adjusted so that it is equal to or less than the viscosity of the polymer solution previously poured out.

6. Process according to claim 5, characterised in that the polymer solutions to be poured out have viscosities of between 0.5 Pa/s and 25 Pa/s.

7. Process according to claim 5 or claim 6,. characterised in that the polymer solutions to be poured out have viscosities of between 0.8 and 20 Pa/s.

8. Process according to any one of claims 5 to 7, characterised in that the viscosity of the respective polymer solution is adjusted by means of the polymer content of the membrane-forming polymer.

9. Process according to any one of claims 5 to 7, characterised in that the viscosity of the respective polymer solution is adjusted by means of the content of membrane-forming polymer and by adding one or more compatible polymers soluble in the non-solvent for the membrane-forming polymer.

10. Process according to any one of claims 5 to 9, characterised in that the viscosity of the polymer solution for a membrane layer is in each case lower than the viscosity of the polymer solution for the membrane layer previously poured out.

11. Process according to claim 10, characterised in that the viscosity of the polymer solution for a layer is in each case lower at least by a factor of 2 than the viscosity of the polymer solution for the layer immediately beneath.

12. Process according to any one of claims 5 to 11, characterised in that the polymer solution having the highest content of polymer that is non-soluble in the non-solvent defines the final filter layer.

13. Process according to any one of claims 5 to 12, characterised in that the polymer solution defining the final filter layer is used as the uppermost polymer solution.

14. Process according to any one of claims 5 to 12, characterised in that the polymer solution defining the final filter layer is used as the polymer solution for the bottom layer.

15. Process according to any one of claims 5 to 14, characterised in that polysulphone, polyether sulphone, aromatic polyamides or cellulose derivatives are used as the membrane-forming polymer material.

16. Process according to any one of claims 5 to 7 and 9 to 15, characterised in that polyvinylpyrrolidone and/or polyethylene glycol is/are used as an additive to the membrane-forming polymer.

17. Use of the MF membrane according to claims 1 to 4 in a filter candle.

## Revendications

1. Membrane de microfiltration intégrale, non supportée, multicouche (membrane MF) en une matière polymère appropriée au procédé d'inversion de phases, à l'exception du polyamide aliphatique, et avec au moins une couche filtrante finale et au moins une couche préfiltrante intégrée, caractérisée en ce que
la couche filtrante finale présente une épaisseur comprise entre 50 et 300 µm, et une structure de pores symétrique, le rapport des épaisseurs de la couche filtrante finale à la couche préfiltrante étant compris entre 1:4 et 4:1.

2. Membrane MF selon la revendication 1, caractérisée en ce qu'elle est constituée d'une couche filtrante finale et de deux à quatre couches préfiltrantes.

3. Membrane MF selon la revendication 1, caractérisée en ce qu'elle présente une couche filtrante finale avec une taille de pores nominale comprise entre 0,1 et 2 µm, et une couche préfiltante à pores grossiers.

4. Membrane de microfiltration selon les revendications 1 à 3, caractérisée en ce que la couche filtrante finale et la couche préfiltrante sont constituées de la même matière polymère.

5. Procédé pour la préparation de membranes de microfiltration intégrales, non supportées, multicouche, dans lequel on coule une solution de polymère sur un support, soit évapore le solvant, soit on diffuse des vapeurs d'un non-solvant vers l'intérieur et on lave à fond, puis on sèche la membrane finie,
caractérisé en ce que l'on coule selon un procédé connu sur un support, une couche d'une solution de polymère et ensuite, successivement, une ou plusieurs couches d'une solution de polymère, à chaque fois avant l'apparition de la turbidité dans la couche coulée auparavant, la viscosité de la solution de polymère étant comprise entre 0,5 Pa.s et 100 Pa.s et la viscosité d'une solution de polymère respectivement coulée étant établie de façon telle à ce qu'elle soit identique ou inférieure à la viscosité de la solution de polymère coulée auparavant.

6. Procédé selon la revendication 5, caractérisé en ce que les viscosités des solutions de polymère prévues à la coulée sont comprises entre 0,5 Pa.s et 25 Pa.s.

7. Procédé selon la revendication 5 ou 6, caractérisé en ce que les solutions de polymère destinées à la coulée présentent des viscosités comprises entre 0,8 et 20 Pa.s.

8. Procédé selon l'une des revendications 5 à 7, caractérisé en ce que la viscosité de la solution de polymère respective est établie en fonction de la teneur en polymère du polymère formant des membranes.

9. Procédé selon l'une des revendications 5 à 7, caractérisé en ce que la viscosité de la solution de polymère respective est déterminée en fonction de la teneur en polymère formant des membranes et par ajout d'un ou plusieurs polymères compatibles, solubles dans un non-solvant pour le polymère formant des membranes.

10. Procédé selon l'une des revendications 5 à 9, caractérisé en ce que la viscosité de la solution de polymère pour une couche de membrane est à chaque fois inférieure à la viscosité de la solution de polymère de la couche de membrane coulée auparavant.

11. Procédé selon la revendication 10, caractérisé en ce que la viscosité de la solution de polymère pour une couche est à chaque fois inférieure d'au moins un facteur de 2 à la viscosité de la solution de polymère de la couche directement sous-jacente.

12. Procédé selon l'une des revendications 5 à 11, caractérisé en ce que la solution de polymère ayant la teneur maximale en polymère insoluble dans un non-solvant définit la couche de filtrante finale.

13. Procédé selon l'une des revendications 5 à 12, caractérisé en ce que l'on utilise comme solution de polymère supérieure la solution de polymère définissant la couche filtrante finale.

14. Procédé selon l'une des revendications 5 à 12, caractérisé en ce que l'on utilise comme solution de polymère pour la couche à l'extrémité inférieure la solution de polymère définissant la couche filtrante finale.

15. Procédé selon l'une des revendications 5 à 14, caractérisé en ce que l'on utilise comme matière polymère formant des membranes la polysulfone, la polyéthersulfone, des polyamides aromatiques ou des dérivés de cellulose.

16. Procédé selon l'une des revendications 5 à 7 et 9 à 15, caractérisé en ce que l'on utilise comme adjuvant au polymère formant des membranes la polyvinylpyrrolidone et/ou le polyéthylèneglycol.

17. Utilisation de la membrane MF selon les revendications 1 à 4 dans une bougie filtrante.
